# EUROPEAN PATENT APPLICATION

(11) **EP 2 613 246 A2**
(43) Date of publication of application: **10.07.2013**
(21) Application number: 12188022.3
(22) Date of filing: 10.10.2012
(51) Int. Cl.: G06F 3/0488, G06F 3/041

(54) **Touch control method**

(30) Priority: 09.01.2012 TW 101100814
(71) Applicant: AmTRAN Technology Co., Ltd., New Taipei City 23553 (TW)
(72) Inventor: Chao, Kuang-Cheng, 235 New Taipei City (TW); Huang, Ying-Wen, 235 New Taipei City, (TW)
(74) Representative: Becker Kurig Straus

(57) **Abstract**

A touch control method is disclosed. The steps of the touch control method include: detecting a first and a second finger print areas generated according to a touching action by a user on the touch panel; calculating a first angle between the first finger print area and a first reference axis and a second angle between the second finger print area and a second reference axis respectively; judging whether each of the first and the second finger print areas corresponding to the touching action is performed by a first hand or a second hand of the user according to the first and the second angles; and controlling a movement of a cursor under an absolute coordinate according to the touching action of the user's first hand, and controlling a movement of the cursor under a relative coordinate according to the touching action of the user's second hand.

## Description

### BACKGROUND OF THE INVENTION

### [Field of the Invention]

The invention relates to a touch control method, and more particularly to a touch control method for controlling an electronic device through a touch panel.

### [Description of Related Art]

With the advances of electronic technology, it has become an inevitable tendency for a current electronic device to provide users with a touch panel to control the electronic device by touching with fingers.

Take digital televisions (TVs) as an example. In the case that digital TVs provide more and more functions, to provide users with a convenient operation interface, according to the conventional technique, a touch panel is disposed on a remote controller, so that users may control a cursor shown on a display image of a digital TV correspondingly by touching the touch panel on the remote controller. Through this kind of interface, users may control movements of the cursor on the display image through the remote controller, and thereby controlling the digital TV.

However, since sizes of display screens of the digital TVs are much larger than those of the touch panels available on the remote controllers, as the user's finger makes a small movement on the touch panel, the cursor on the display image makes a movement of long distance. That is, when the user intends to make fine adjustments on locations of the cursor, there will be a certain degree of difficulty.

### SUMMARY OF THE INVENTION

The invention provides a plurality of touch control methods to improve resolution of movements performed by a cursor on a display image.

The invention further provides a touch control method, in which a touching action performed by different hands of a user makes an electronic device operate different functions.

The invention proposes a touch control method. The steps of the touch control method include: detecting a first and a second finger print areas generated according to a touching action by a user on a touch panel; calculating a first angle between the first finger print area and a first reference axis and a second angle between the second finger print area and a second reference axis respectively; judging whether each of the first and the second finger print areas corresponding to the touching action is performed by a first hand or a second hand of the user according to the first and the second angles; controlling a movement of a cursor under an absolute coordinate according to the touching action performed by the user's first hand, and controlling a movement of the cursor under a relative coordinate according to the touching action performed by the user's second hand.

The invention proposes another touch control method. The steps of the touch control method include: detecting a first and a second finger print areas generated according to a touching action by a user on a touch panel; and judging whether each of the first and the second finger print areas corresponding to the touching action is performed by a first hand or a second hand of the user according to the first and the second angles; controlling a movement of a cursor under an absolute coordinate according to the touching action performed by the user's first hand, and controlling a movement of the cursor under a relative coordinate according to the touching action performed by the user's second hand.

The invention further proposes a touch control method. The steps of the touch control method include: detecting a first and a second finger print areas generated according to a touching action by a user on a touch panel; and calculating a first angle between the first finger print area and a first reference axis and a second angle between the second finger print area and a second reference axis respectively; judging whether each of the first and the second finger print areas corresponding to the touching action is performed by a first hand or a second hand of the user, wherein the touching action performed by the user's first hand is for driving an electronic device to operate a first function, and the touching action performed by the user's second hand is for driving the electronic device to operate a second function.

Based on the above, by detecting the touching action performed by the user's first and second hands, the invention controls the movements of the cursor on the display image under the absolute and the relative coordinate respectively. In this way, the movement resolution of the cursor on the display image may be effectively improved.

In order to make the aforementioned features and advantages of the invention more comprehensible, embodiments accompanying figures are described in detail below.

### BRIEF DESCRIPTION OF THE DRAWINGS

The accompanying drawings constituting a part of this specification are incorporated herein to provide a further understanding of the invention. Here, the drawings illustrate embodiments of the invention and, together with the description, serve to explain the principles of the invention.

Fig. 1 is a system structure diagram illustrating a display device 100 according to embodiments of the invention.

Fig. 2A is a flow chart illustrating a touch control method according to one embodiment of the invention.

Fig. 2B is a flow chart illustrating an implementation detail of the touch control method according to embodiments of the invention.

Fig. 3A is a flow chart illustrating an operation of detecting finger print areas according to embodiments of the invention.

Fig. 3B is a schematic view illustrating a touching action performed by a user.

Fig. 3C is a schematic view illustrating finger print areas according to embodiments of the invention.

Fig. 4 is a schematic view of a display image 111 according to embodiments of the invention.

Fig. 5 is a flow chart illustrating a touch control method according to another embodiment of the invention.

### DESCRIPTION OF EMBODIMENTS

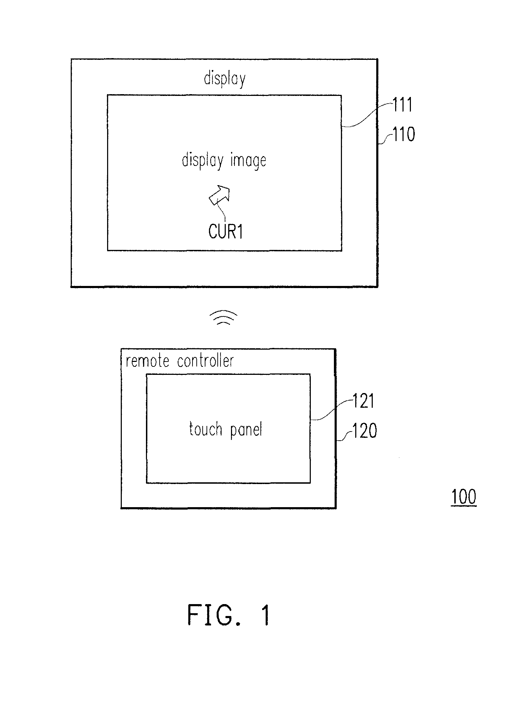

Please refer to Fig. 1. Fig. 1 is a system structure diagram of a display device 100 according to embodiments of the invention. The display device 100 includes a display 110 and a remote controller 120. The display 110 may be a digital TV and generate a display image 111. The remote controller 120 has a touch panel 121 to receive a touching action of a user and to control locations of a cursor CUR1 on the display image 111 through the touch panel 121, wherein the touching action performed by a first hand of the user touching the touch panel 121 makes the cursor CUR1 on the display image 111 move under an absolute coordinate correspondingly, and the touching action performed by a second hand of the user touching the touch panel 121 makes the cursor CUR1 on the display image 111 move under a relative coordinate correspondingly.

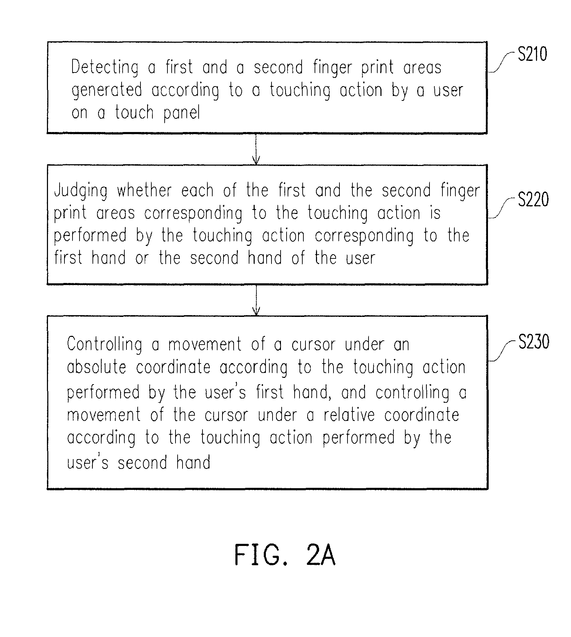

In order to explain the touch control method of the display device 100 of the present embodiments in greater details, please refer to both Fig. 1 and 2A, wherein Fig. 2A is a flow chart illustrating the touch control method according to one embodiment of the invention. In a step S210, by detecting the user's touching action on the touch panel 121, the remote controller 120 generates a first and a second finger print areas according to the touching action. That is, when the user touches the touch panel 121 on the remote controller 120, two fingers are required for the action, such as thumbs of a left hand and a right hand. While the touching action is performed, the two finger print areas made on the touch panel 121 by the thumbs of the user's left hand and right hand are detected. Then, in a step S220, the display device 100 judges whether the touching action corresponding to the detected first finger print area is performed by the user's left hand or right hand, and whether the touching action corresponding to the second finger print area is performed by the user's right hand or left hand.

In a step S230, the display 110 controls movements of the cursor CUR1 on the display image 111 under an absolute coordinate according to the touching action performed by the user's first hand, and controls movements of the cursor CUR1 under a relative coordinate according to the touching action performed by the user's second hand. Herein, the absolute coordinate may be set according to the proportion of sizes of the display image 111 and the touch panel 121. For example, the origin of the absolute coordinate corresponds to centers of the display image and the touch panel; when the user touches the center of the touch panel 121 with the first hand, the cursor CUR1 is shown at the center of the display image 111 correspondingly. It is further assumed that a width of the display image 111 is 10 times of that of the touch panel 121. When the user's first hand slides along a horizontal axis of the touch panel 121 for 1 length unit, the cursor CUR1 makes a displacement along a horizontal axis of the display image 111 for equivalent to 10 length units.

In addition, the relative coordinate may be set based on the location of the cursor CUR1 as the origin, and the finger print areas generated by the touching action performed by the user's second hand correspond to the origin of the relative coordinate. When the user's second hand slides on the touch panel 121, the cursor CUR1 moves for a distance in certain proportion to the slide of the user's second hand. Herein, the ratio of the distance for which the user's second hand slides on the touch panel 121 to the distance for which the cursor CUR1 moves on the display image 111 correspondingly may be set according to the user's needs or the designers' perception. In brief, the larger the ratio of the distance for which the user's second hand slides on the touch panel 121 to the distance for which the cursor CUR1 moves on the display image 111 correspondingly is, the higher the resolution for the movements of the cursor CUR1 on the display image 111 is (and the moving speed decreases correspondingly). In contrast, the smaller the ratio of the distance for which the user's second hand slides on the touch panel 121 to the distance for which the cursor CUR1 moves on the display image 111 correspondingly is, the lower the resolution for the movements of the cursor CUR1 on the display image 111 is (and the moving speed increases correspondingly).

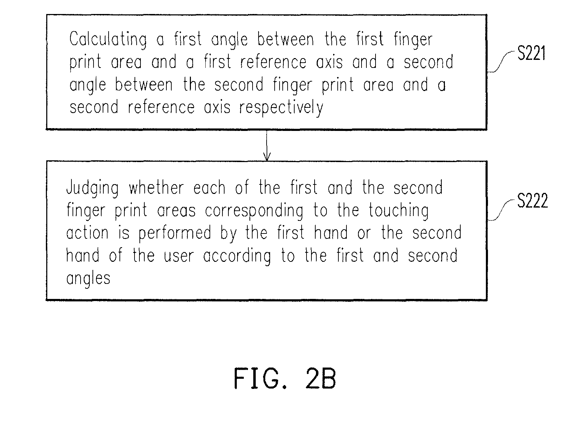

Please refer to both Fig. 1 and Fig. 2B for how to judge whether it is the user's first hand or second hand that performs the touching action which generates the first and the second finger print areas. Fig. 2B is a flow chart illustrating an implementation detail of the touch control method according to embodiments of the present invention. When the user uses both hands to touch the touch panel 121 on the remote controller 120 simultaneously, the user uses the thumbs of the left hand and the right hand respectively to touch the touch panel 121. When the user uses both thumbs to touch the touch panel 121, the first and the second finger print areas generated should be two finger print areas similar to ellipses; in addition, there are certain angles between the first and the second finger print areas and the horizontal axis of the touch panel 121. Therefore, in a step S221, when the judgment of whether it is the user's first hand or second hand that performs the touching action generating the first and the second finger print areas is performed, first, a first angle between the first finger print area and the first reference axis is calculated; then, a second angle between the second finger print area and the second reference axis is calculated.

It should be noted that regarding the above judgment of whether it is the user's first hand or second hand that performs the touching action generating the first and the second finger print areas, information about the first and the second finger print areas may be transmitted to the display 110 via the remote controller 120, and the above judgment is performed by the display 110. Certainly, in a step S222, the remote controller 120 may directly perform the judgment of whether it is the user's first hand or second hand that performs the touching action generating the first and the second finger print areas according to the first and the second finger print areas it receives.

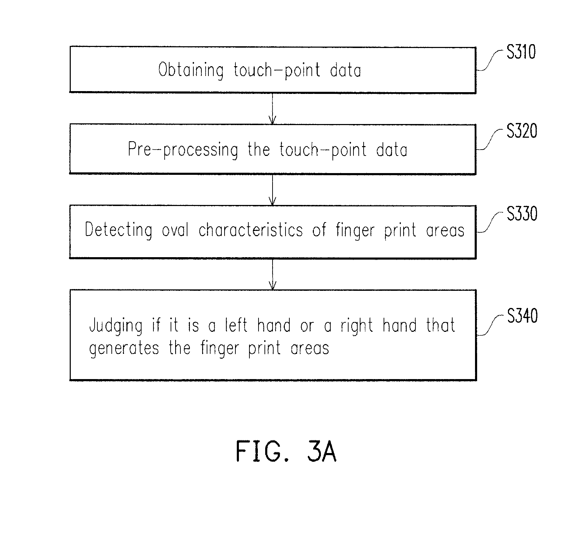

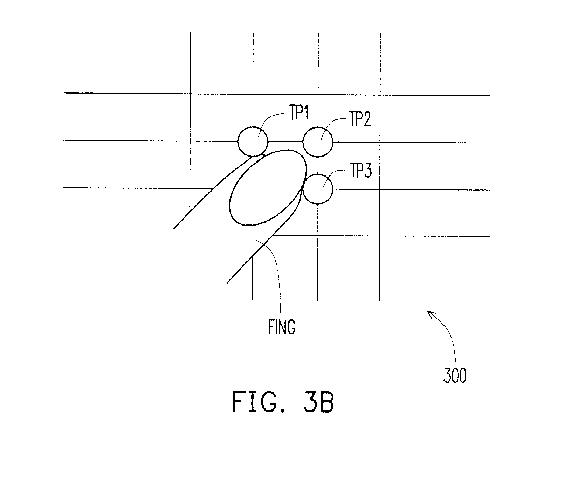

Please refer to FIG. 3A. Fig. 3A illustrates a way of implementing the judgment of finger print areas according to embodiments of the invention. First, in a step S310, a plurality of touch-point data generated by the user's touching action on the touch panel are obtained. When an operation of detecting the touch condition of the touch panel is performed, a plurality of touch-point data corresponding to a plurality of touch points may be obtained, wherein the touch-point data is, for example, a datum of 0∼255. When the touch-point datum is 0, it represents that the corresponding touch point is under a stress of 0; in contrast, when the touch-point datum is 255, it represents that the corresponding touch point is under a stress of a maximum value. Please refer to both Fig. 3A and Fig. 3B. Fig. 3B is a schematic view illustrating a touching action performed by a user. It is clear from Fig. 3B that when the user's finger FING touches the touch panel 300, touch-point data corresponding to a plurality of touch points on the touch panel 300 may be obtained, wherein the touch-point data to which touch points TP1∼TP3 correspond are values larger than 0.

Then, in a step S320, a pre-processing operation is performed on all of the obtained touch-point data. Herein, the pre-processing operation means to filter out the touch-point data that exist independently with a value larger than 0, and thereby reducing the influence of noise. For salt and pepper noise and speckle noise, it is more efficient to use a method of median filtering.

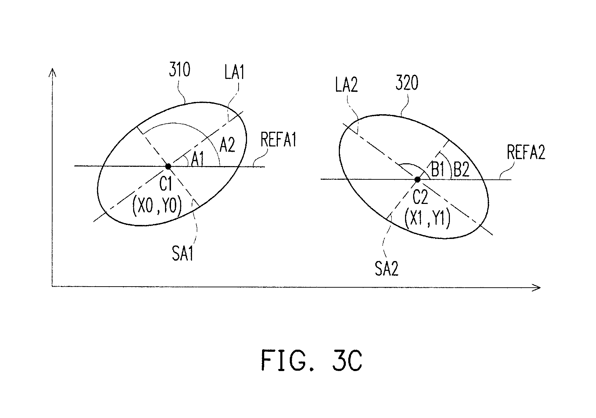

In a step S330, an operation of detecting the oval characteristics of the finger print areas is performed, wherein first by using edge detect methods such as Robert Cross, Sobel or Canny method, a plurality of boundaries of the finger print areas are detected. Then, the oval characteristics are detected by using methods, for example, in Hough Transform family, such as Classical Hough Transform, Generalized Hough Transform or Randomized Hough Transform. Please refer to Fig. 3C simultaneously. Fig. 3C is a schematic view illustrating finger print areas according to embodiments of the invention, wherein a plurality of parameters of an ellipse may be detected. Take the first finger print area 310 as an example. Parameters including its long axis LA1, short axis SA1, the coordinate (X0, Y0) of the center C1, and the angle A1 between the first reference axis REFA1 and the long axis LA1 may be detected. And take the second finger print area 320 as an example. Parameters including its long axis LA2, short axis SA2, the coordinate (X1, Y1) of the center C2, and the angle B1 between the second reference axis REFA2 and the long axis LA2 may be detected. Certainly, the angle A2 between the short axis SA1 and the first reference axis REFA1 of the first finger print area 310 and the angle B2 between the short axis SA2 and the second reference axis REFA2 of the second finger print area 320 may also be obtained correspondingly.

Please refer to both Fig. 3A and Fig. 3C. In a step S340, it is determined whether the finger print area is generated by the touch of the left hand or the right hand. Take the illustration of Fig. 3C as an example. With angles A1 and B1 as the first and the second angles respectively, the second angle B1 is apparently larger than the first angle A1. Therefore, it may be determined that the first finger print area 310 is generated by the first hand (the left hand, for example) of the user, and that the second finger print area 320 is generated by the second hand (the right hand, for example) of the user. Certainly, the first and the second angles may be angles A2 and B2 respectively. Since the first angle A2 is apparently larger than the second angle B2, it is determined that the first finger print area 310 is generated by the first hand (the left hand, for example) of the user, and that the second finger print area 320 is generated by the second hand (the right hand, for example) of the user.

Additionally speaking, the extending directions of the first and the second reference axes REFA1 and REFA2 do not have to overlap but may do so. In addition, in the present embodiment, the first and the second reference axes REFA1 and REFA2 parallels each other.

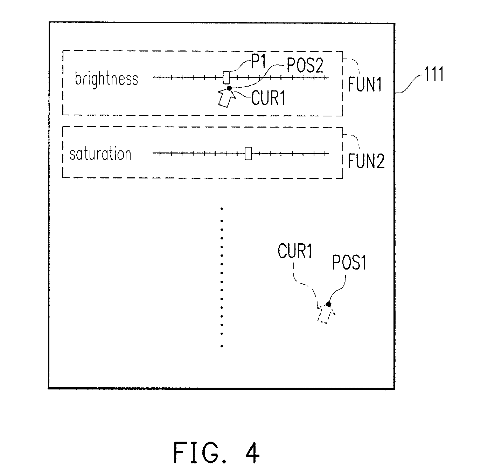

Please refer to Fig. 4. Fig. 4 is a schematic view of a display image 111 according to embodiments of the invention. In Fig. 4, a plurality of options FUN1, FUN2 ... are disposed on the display image 111, wherein, for example, the option FUN1 provides an interface for adjusting the display brightness, and the option FUN2 provides an interface for adjusting the display saturation. Through the movement generated by the user's first hand under the absolute coordinate, the cursor CUR1 may be moved to one of the options FUN1, FUN2 ... When a function of one of the options FUN1, FUN2 ... is to be operated, it is operated through the movement generated by the user's second hand under the relative coordinate. That is, when the user intends to adjust the display brightness, he moves the cursor CUR1 from a position POS1 to the option FUN1 (a position POS2) with the movement generated by the first hand under the absolute coordinate. Then, with the movement generated by the second hand under the relative coordinate, he moves a marker P1 for setting the brightness to increase or decrease the display brightness shown on the display image 311. In this way, the user may make fine adjustments on the display brightness and may further make the display have a better performance.

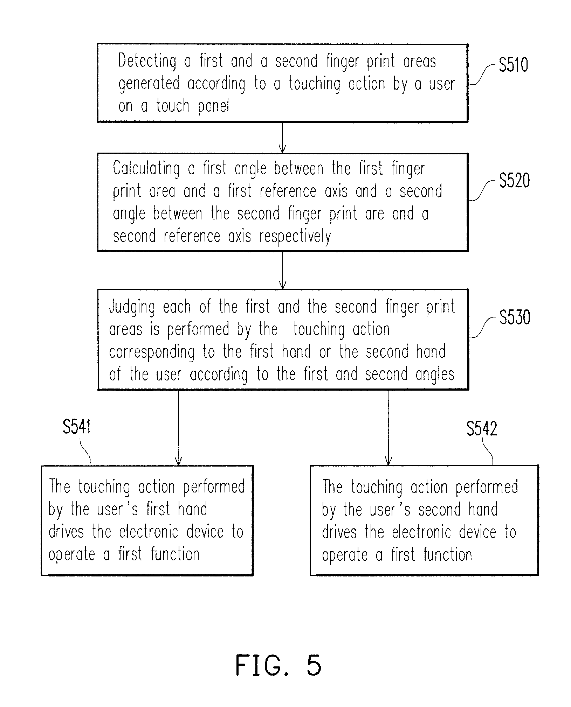

Please refer to Fig. 1 and Fig. 5, wherein Fig. 5 is a flow chart illustrating a touch control method according to another embodiment of the invention. In a step S510, the remote controller 120 detects the first and the second finger print areas generated according to the touching action of the user on the touch panel 121. Then, in a step S520, the display device 100 calculates the first angle between the first finger print area and the first reference axis and the second angle between the second finger print area and the second reference axis. In a step S530, the display device 100 judges whether it is the user's first or second hand that performs the touching action corresponding to the first and the second finger print areas according to the first and the second angles. In steps S541 and S542, the touching action performed by the user's first hand drives a first function of the electronic device to which the display 110 belongs, and the touching action performed by the user's second hand drives a second function of the electronic device to which the display 110 belongs, respectively.

Herein, in the above embodiments and implementation details, there are detailed explanations regarding the detection of the first and the second finger print areas and the way of calculating the first and the second angles. Detail descriptions will not be repeated. Different from the above embodiments, the present embodiment uses the touching action performed by the user's first and second hands to drive the electronic device to operate the first and the second functions, respectively. That is, through the two hands, the user is able to perform different function operations on the electronic device. For example, the user may use the left hand to input capital letters into the electronic device, and the right hand to input lowercase letters into the electronic device.

According to the above descriptions, the invention makes the electronic device perform different operations according to the detection of the touching action performed by the user's first and second hands on the touch panel on the remote controller, wherein in controlling the display, the touching action performed by the user's first and second hands controls the movements of the cursor on the display image under the absolute and the relative coordinate respectively. In this way, the user may perform a finer control on the electronic device through the touch panel on the remote controller, and thereby the convenience for use is improved.

Although the invention has been described with reference to the above embodiments, it will be apparent to one of ordinary skill in the art that modifications to the described embodiments may be made without departing from the spirit of the invention. Therefore, the protecting range of the invention falls in the appended claims.

## Claims

1. A touch control method, comprising:
detecting a first and a second finger print areas (310, 320) generated according to a touching action by a user on a touch panel (121);
calculating a first angle (A1) between the first finger print area (310) and a first reference axis (REFA1) and a second angle (B1) between the second finger print area 320 and a second reference axis (REFA2) respectively;
judging whether each of the first and the second finger print areas (310, 320) corresponding to the touching action is performed by a first hand or a second hand of the user according to the first (A1) and the second angles (B1) ; and
controlling a movement of a cursor (CUR1) under an absolute coordinate according to the touching action of the user's first hand, and controlling a movement of the cursor under a relative coordinate according to the touching action of the user's second hand.

2. The touch control method according to claim 1, wherein the first and the second finger print areas (310, 320) are a first and a second oval areas respectively.

3. The touch control method according to claim 1, wherein the step of calculating the first angle (A1) between the first finger print area (310) and the first reference axis (REFA1) and the second angle (B1) between the second finger print area (320) and the second reference axis (REFA2) respectively comprises:
calculating a first and a second long axes (LA1, LA2) of the first and the second oval areas respectively; and
calculating an angle between the first long axis (LA1) and the first reference axis (REFA1) to obtain the first angle (A1), and calculating an angle between the second long axis (LA2) and the second reference axis (REFA2) to obtain the second angle (B1).

4. The touch control method according to claim 1, wherein the step of calculating the first angle (A1) between the first finger print area (310) and the first reference axis (REFA1) and the second angle (B1) between the second finger print area (320) and the second reference axis (REFA2) respectively includes:
calculating a first and a second short axes (SA1, SA2) of the first and the second oval areas respectively; and
calculating an angle between the first short (SA1) axis and the first reference axis (REFA1) to obtain the first angle (A2), and calculating an angle between the second short axis (SA2) and the second reference axis (REFA2) to obtain the second angle (B2).

5. The touch control method according to claim 2, wherein the first reference axis (REFA1) passes through a center (C1) of the first oval area, and the second reference axis (REFA2) passes through a center (C2) of the second oval area.

6. The touch control method according to claim 1, wherein the touch panel (121) is disposed on a remote controller (120) for a display controlling operation.

7. The touch control method according to claim 1, wherein the step of detecting the first and the second finger print areas (310, 320) generated according to the touching action by the user on the touch panel (121) comprises:
obtaining a plurality of touch-point data generated by the touching action performed by the user on the touch panel (121);
performing a pre-processing operation for filtering out noise of the touch-point (TP1-TP3) data; and
obtaining the first and the second finger print areas (310, 320) according to the pre-processed touch-point (TP1-TP3) data.

8. A touch control method, comprising:
detecting a first and a second finger print areas (310, 320) generated according to a touching action by a user on a touch control panel (121);
calculating a first angle (A1) between the first finger print area (310) and a first reference axis (REFA1) and a second angle (B1) between the second finger print area (320) and a second reference axis (REFA2) respectively; and
judging whether each of the first and the second finger print areas (310, 320) corresponding to the touching action is performed by a first hand or a second hand of the user according to the first (A1) and the second angles (B1),
wherein the touching action performed by the first hand of the user is for driving a electronic device to operate a first function, and the touching action performed by the second hand of the user is for driving the electronic device to operate a second function.

9. A touch control method, comprising:
detecting a first and a second finger print areas (310, 320) generated according to a touching action by a user on a touch control panel (121);
judging whether each of the first and the second finger print areas (310, 320) corresponding to the touching action is performed by a first hand or a second hand of the user; and
controlling a movement of a cursor (CUR1) under an absolute coordinate according to the touching action performed by the first hand of the user, and controlling a movement of the cursor (CUR1) under a relative coordinate according to the touching action performed by the second hand of the user.

10. The touch control method according to claim 9, wherein a plurality of options are disposed on an image (111) of a display (110), and the movement of the cursor (CUR1) under the absolute coordinate is to move to one of the options (FUN1, FUN2).

11. The touch control method according to claim 10, wherein the movement of the cursor (CUR1) under the relative coordinate is to click on and execute one of the options (FUN1, FUN2).
